Europäisches Patentamt

(19) European Patent Office

Office européen des brevets

(11) Veröffentlichungsnummer: **0 109 543**
**B1**

(12) **EUROPÄISCHE PATENTSCHRIFT**

(45) Veröffentlichungstag der Patentschrift:
03.09.86

(51) Int. Cl.⁴: **H 01 M 10/39, H 01 M 10/50**

(21) Anmeldenummer: **83110287.6**

(22) Anmeldetag: **15.10.83**

(54) Hochtemperatur-Speicherbatterie.

(30) Priorität: **20.11.82 DE 3242901**

(43) Veröffentlichungstag der Anmeldung:
**30.05.84 Patentblatt 84/22**

(45) Bekanntmachung des Hinweises auf die Patenterteilung:
**03.09.86 Patentblatt 86/36**

(84) Benannte Vertragsstaaten:
**BE FR GB IT NL**

(56) Entgegenhaltungen:
**EP-A-0 031 448**
**EP-A-0 065 248**
**DD-A-153 026**
**DE-A-2 835 501**
**DE-A-3 137 677**
**DE-B-2 163 304**
**GB-A-1 386 525**

(73) Patentinhaber: **BROWN, BOVERI & CIE Aktiengesellschaft, Kallstadter Strasse 1, D-6800 Mannheim 31 (DE)**

(72) Erfinder: **Reiss, Harald, Dr., Im Hirschmorgen 19, D-6906 Leimen (DE)**
Erfinder: **Ziegenbein, Botho, Dr., Am Bischofswald 19, D-6901 Neckarsteinach (DE)**

(74) Vertreter: **Kempe, Wolfgang, Dr., c/o Brown, Boveri & Cie AG Postfach 351, D-6800 Mannheim 1 (DE)**

## Beschreibung

Die Erfindung bezieht sich auf eine Hochtempertaur-Speicherbatterie gemäß dem Oberbegriff des Patentanspruches 1.

Solche Hochtemperatur-Speicherbatterien, die aus elektrochemischen Speicherzellen aufgebaut sind, werden in vermehrten Maße für den Elektroantrieb von Fahrzeugen eingesetzt. > > ochtemperatur-Speicherbatterien, die als Engergiequelle vorgesehen sind, müssen mindestens einen Energieinhalt von 40 kWh besitzen, wofür mehr als hundert Speicherzellen benötigt werden. Eine solche Hochtemperatur-Speicherbatterie arbeitet bei einer Temperatur von 350 °C. Um Wärmeverluste zu vermeiden, sind ihre Speicherzellen von einer thermischen Isolierung umgeben. Andererseits weist eine solche Hochtemperatur-Speicherbatterie jedoch auch eine Kühleinrichtung auf, die dafür sorgt, daß die Betriebstemperatur der Speicherzelle nicht überschritten wird, so daß es zu keiner Beschädigung derselben kommen kann.

Aus der GB-PS 13 86 525 ist eine Hochtemperatur-Speicherbatterie mit Speicherzellen auf der Basis von Natrium und Schwefel bekannt, die von einer Isolierung umgeben sind. Diese thermische Isolierung wird durch eine doppelwandiges Gehäuse begrenzt, wobei zwischen den Gehäusewandungen das Isoliermaterial angeordnet ist. Im Innenraum dieses Gehäuses sind die Speicherzellen angeordnet. Der Innenraum des Gehäuses weist eine Zu- und eine Ableitung für eine Kühlmedium auf. Von Nachteil ist hierbei, daß die Zuleitung für das Kühlmedium am einen Ende und die Ableitung am anderen Ende der Batterie angeordnet ist. Dies bedeutet, daß das in die Hochtemperatur-Speicherbatterie eingeleitete Kühlmedium die Speicherzellen, die in der Nähe der Eintrittsöffnung angeordnet sind, besser kühlen kann als die Speicherzellen, welche sich in der Nähe der Austrittsöffnung des Kühlmediums befinden, da sich das Kühlmedium beim An- und Vorbeiströmen an den ersten 8peicherzellen bereits sehr stark erwärmt. Als weiterer Nachteil ist herbei zu bemerken, daß die Speicherzellen von dem Kühlmedium teilweise direkt angeströmt werden, wodurch eine ungünstige Kühlung bewirkt wird.

Der Erfindung liegt deshalb die Aufgabe zugrunde, eine Hochtemperatur-Speicherbatterie mit einer Kühlvorrichtung zu schaffen, die eine optimale Kühlung aller Speicherzellen erlaubt, derart, daß jede Speicherzelle in dem Maß gekühlt werden kann, daß sich alle Speicherzellen auf dem gleichen Temperaturniveau befinden.

Diese Aufgabe wird erfindungsgemäß durch die kennzeichnenden Merkmale des Patentanspruches 1 gelöst.

Bei der vorliegenden Hochtemperatur-Speicherbatterie gibt jede Speicherzelle die von ihr erzeugte Wärme an einen Wärmetauscher ab, durch dessen Innenbereich ein Kühlmedium geleitet wird. Jede Speicherzelle steht mit mindestens einem Wärmetauscher in Wechselwirkung. Jeder Wärmetauscher ist für die Kühlung von mehreren Speicherzellen vorgesehen. Auf Grund der Tatsache, daß jede Speicherzelle die von ihr erzeugte Wärme an einen Wärmetauscher abgibt, wird die nachteilige Kühlung der Speicherzellen durch direkte Anströmung mit dem Kühlmittel vermieden, so daß eine ungleichmäßige Kühlung ausgeschlossen wird. Die Wärmetauscher sind als flächige Kühlkörper ausgebildet, welche die Form eines Quaders aufweisen. Durch die besondere Führung des Kühlmediums innerhalb der Wärmetauscher wird ein Gegenströmungsprinzip bewirkt, wodurch eine völlig diffuse, im Grenzfall gleichmäßige Temperaturverteilung der Außenfläche eines jeden Wärmetauschers erzielt wird. Die angestrebte Temperaturverteilung wird von der Lage der Zu- und Ableitungen des Kühlmediums in den Wärmetauschern bzw. in der Batterie nicht beeinflußt. Die thermische Kopplung der Speicherzellen an die Wärmetauscher erfolgt zum einen durch Strahlungsübergänge, die durch geeignete Präparierung der Speicherzellenoberflächen verbessert werden können. Zum anderen erfolgt die thermische Kopplung mittels Wärmeleitung durch das zwischen den Speicherzellen und den Wärmetauschern befindliche ruhende oder in freier Konvektion befindliche Gas, vorzugsweise der Luft. Die thermische Kopplung zwischen den Speicherzellen und den Wärmetauschern kann durch zusätzliche Festkörperkontakte zwischen den Speicherzellen und den Wärmetauschern erhöht werden. Als Kühlmedium wird vorzugsweise eine Flüssigkeit oder ein Gas, vorzugsweise Luft verwendet.

Erfindungsgemäß ist jeder Wärmetauscher im wesentlichen als quaderförmiger Kühlkörper ausgebildet, der wenigstens zwei große Kühlflächen aufweist. Jeder Kühlkörper eines Wärmetauschers weist im Inneren wenigstens eine, vorzugsweise mehrere Kühlschleifen auf. Jede Kühlschleife wird durch wenigstens zwei zu den oberen und unteren Begrenzungsflächen des Kühlkörpers parallel verlaufende Kanäle gebildet, die am ersten Ende des Kühlkörpers jeweils über eine Umlenköffnung miteinander verbunden sind. Jede Kühlschleife weist nur eine Eintritts- und eine Austrittsöffnung für das Kühlmedium auf. Die Eintrittsöffnung der Kühlschleifen eines Wärmetauschers sind mit einem gemeinsamen Zuführungskanal und die Austrittsöffnungen mit einem gemeinsamen Ableitungskanal für das Kühlmedium verbunden. Die Eintrittöffnungen der Kühlschleifen sind am zweiten Ende des Kühlkörpers im Bereich der ersten Kühlfläche des Wärmetauschers angeordnet, während die Austrittsöffnungen der Kühlschleifen im Bereich der zweiten Kühlfläche des Wärmetauschers installiert sind.

Bei einer Ausführungsform der Erfindung sind die Speicherzellen mit ihren Längsachsen senkrecht zu den Kühlschleifen der Wärmetauscher angeordnet, und in einer wärmeleitenden Verbindung längs der Kühlflächen, eine Reihe bildend, installiert. Bei einer anderen Ausführungsform der Erfindung sind die Speicherzellen einen Quader bildend angeordnet. Die Speicherzellen sind so gehalten, daß keine Berührung zwischen benachbarten Speicherzellen erfolgt. Gegen die oberen und/oder unteren Begrenzungsflächen der so installierten Speicherzellen wird erfindungsgemäß jeweils wenigstens eine Kühlfläche eines Wärmetauschers gesetzt. Bei dieser Zuordnung der Kühlflächen und der Speicherzellen ist es möglich, die innerste Elektrode der Speicherzellen elektrisch isoliert mit den Kühlflächen zu verbinden, so daß eine Wärmeleitung zwischen dem Innenbereich der Speicherzellen und der Kühlflächen stattfindet, wodurch auch eine Kühlung der Innenbereiche der Speicherzellen erzielt wird. Erfindungsgemäß kann jede Speicherzelle zusätzlich mit einer Hülse aus einem sehr gut wärmeleitenden Material umgeben werden. Diese Hülsen werden mit den Kühlflächen durch Bildung von Festkörperkontakten verbunden, so daß eine weitere Verbesserung der Wärmeableitung möglich ist. Durch die Verwendung solcher Hülsen wird die Wärmeabfuhr und der Temperaturausgleich parallel zu den Längsachsen der Speicherzellen sehr begünstigt.

Nachfolgend wird die Erfindung anhand von Zeichnungen erläutert.

Es zeigen:

Figur 1: Eine Hochtemperatur-Speicherbatterie,

Figur 2: einen Wärmetauscher, wie er in der Hochtemperatur-Speicherbatterie gemäß Figur 1 verwendet wird,

Figur 3: die Anordnung von zwei Wärmetauschern über bzw. unter den Speicherzellen.

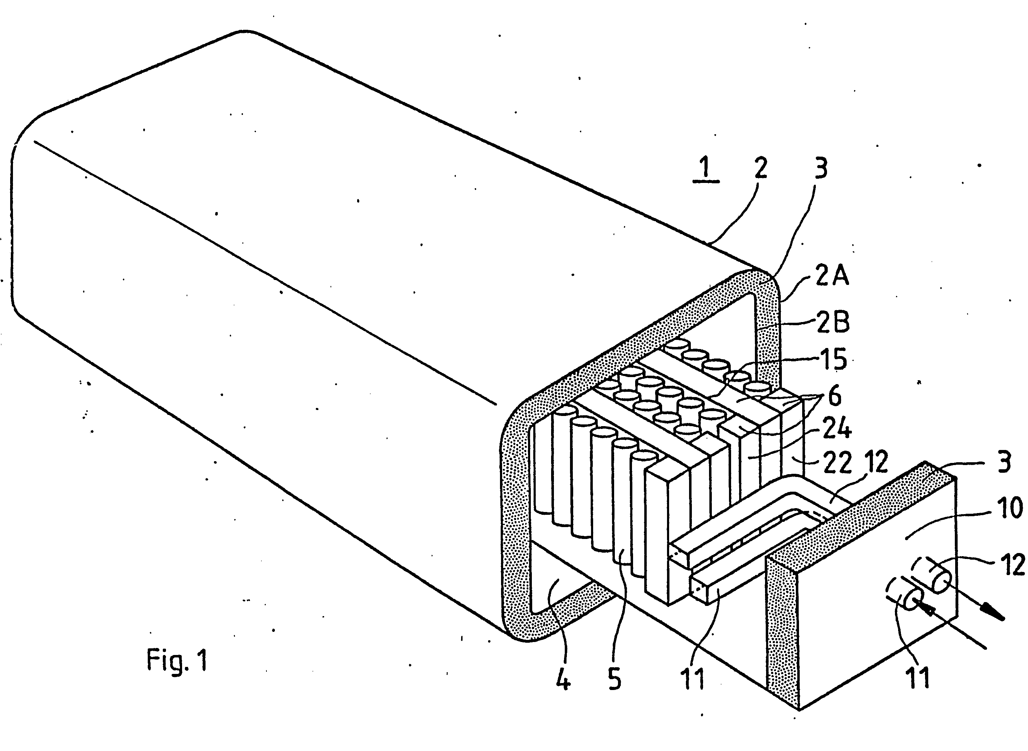

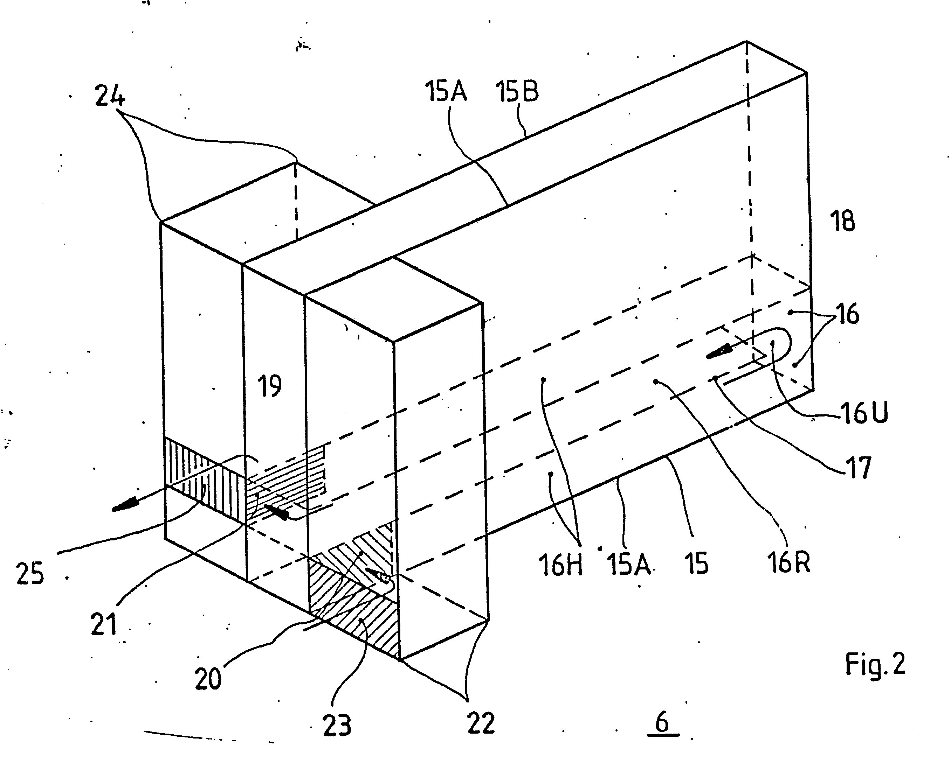

Die in Figur 1 dargestellte Hochtemperatur-Speicherbatterie 1 besteht im wesentlichen aus einem doppelwandigen metallischen Gehäuse 2. Dieses weist bei der hier dargestellten Ausführungsform die Gestalt eines Quaders auf. Die äußere und die innere Gehäusewandung 2A und 2B sind aus Stahl gefertigt. Sie sind in einem vorgebbaren Abstand voneinander angeordnet, derart, daß zwischen ihnen ein Raum verbleibt, der mit einem Isoliermaterial 3 ausgefüllt ist. Zusätzlich ist dieser Raum evakuiert. Die Gehäusewandungen 2A, 2B sind so ausgebildet, daß der evakuierte Raum nach außen und innen gasdicht verschlossen ist. Als Isoliermaterial 3 kann beispielsweise ein oxidkeramisches Pulver verwendet werden. Das Gehäuse 2 weist einen Innenraum 4 auf, der für die Aufnahme der Speicherzellen 5 vorgesehen ist. In dem Innenraum 4 sind bei dem hier dargestellten Ausführungsbeispiel zwei Wärmetauscher 6 angeordnet. Die beiden Wärmetauscher weisen jeweils einen flächigen Kühlkörper 15 auf, welcher die Form eines Quaders besitzt. Die beiden Wärmetausche 6 sind so installiert, daß

die großen Kühlflächen 15A, 15B des in Figur 2 im Detail dargestellten Kühlkörpers 15 senkrecht positioniert sind. Wie anhand von Figur 1 zu sehen ist, sind beidseitig eines jeden Wärmetauschers 6 Speicherzellen 5 angeordnet. Die Speicherzellen 5 sind längs der Kühlflächen 15A, 15B hintereinander, eine Reihe bildend, installiert. Die Halterung einer jeden Speicherzellenreihe 5 erfolgt derart, daß jede Speicherzelle 5 der Reihe an der ihr benachbarten Kühlfläche 15A, 15B des Wärmetauschers 6 anliegt, so daß eine gute wärmeleitende Verbindung zwischen der Kühlfläche 15A, 15B und der Speicherzelle 5 entsteht. Zwischen jeweils zwei aufeinanderfolgenden Speicherzellen 5 einer Reihe ist sinnvollerweise ein schmaler Spalt vorgesehen. Durch die Verwendung von Halterungen (hier nicht dargestellt), werden die Speicherzellen 5 in dieser gewünschten Position befestigt. Die Abmessungen der Wärmetauscher 6, insbesondere die ihrer Kühlflächen 15A, 15B sind so gewählt, daß jede Speicherzelle einer Reihe wenigstens einseitig über ihre gesamte Länge in engem Kontakt mit der Kühlfläche 15A, 15B steht, welche dieser Speicherzellenreihe 5 zugeordnet ist. Die Höhe der Kühlflächen 15A, 15B ist geringfügig größer als die der Speicherzellen 5. Die Länge der Kühlflächen 15A, 15B eines jeden Wärmetauschers 6 überschreitet ebenfalls nur geringfügig die Länge der mit ihnen in Kontakt stehenden Speicherzellenreihen 5. Bei dem hier dargestellten Ausführungsbeispiel sind im Innenraum der Hochtemperatur-Speicherbatterie 1 zwei solche Wärmetauscher 6 angeordnet, mit denen es möglich ist, vier Reihen mit jeweils achtundzwanzig hintereinander angeordneten Speicherzellen 5 zu kühlen. Die Hochtemperatur-Speicherbatterie kann bei Bedarf jedoch auch größer oder kleiner ausgebildet werden, d. h., daß innerhalb einer solchen Hochtemperatur-Speicherbatterie 1 mehr als zwei bzw. weniger als zwei Wärmetauscher 6 angeordnet werden können. Durch entsprechende Wahl der Abmessungen dieser Wärmetauscher 6 können eine größere Anzahl bzw. eine kleinere Anzahl von Speicherzellen 5 gekühlt werden.

Die Hochtemperatur-Speicherbatterie 1 ist so ausgebildet, daß die Speicherzellen zusammen mit den Wärmetauschern 6 in den Innenraum 4 eingesetzt, bzw. diesem bei Bedarf wieder entnommen werden können. Zu diesem Zweck ist das Gehäuse an einer Stirnfläche durch einen Stopfen 10 verschlossen. Dieser ist ebenfalls doppelwandig ausgebildet. Zwischen seiner inneren und äußeren Gehäusewandung ist ein Isoliermaterial 3 angeordnet. Die Abmessungen des Stopfens 10 sind so gewählt, daß durch ihn die Öffnung in der Stirnfläche des Gehäuses 2 vollständig verschlossen wird. Die beiden Wärmetauscher 6 sind für die Zuleitung des Kühlmediums an eine Leitung 11 angeschlossen, die im Bereich der beiden Wärmetauscher 6 einen Anschluß aufweist. Die Leitung 11 ist durch die thermische Isolierung des Stopfens 10 nach außen geführt. Für die Ableitung des erwärmten Kühlmediums ist eine zweite Leitung 12 vorgesehen, die im Bereich der beiden Wärmetauscher 6 ebenfalls einen Anschluß aufweist. Die Leitung 12 ist auch durch die Isolierung 3 des Stopfens nach außen geführt.

In Figur 2 ist einer der Wärmetauscher 6 im Detail dargestellt. Dieser Wärmetauscher 6 weist einen zentral angeordneten flächigen Kühlkörper 15 in Form eines Quaders auf. Die Höhe seiner großen Kühlflächen 15A, 15B ist so gewählt, daß sie geringfügig größer ist als die Höhe bzw. die Länge der Speicherzellen 5, so daß diese mit ihren Längsachsen senkrecht zu den Kühlschleifen 16 des Kühlkörpers 15 angeordnet werden können. Die Länge der Kühlflächen 15A, 15B ist so bemessen, daß sie etwas größer ist, als die Länge der mit ihr in Verbindung zu bringenden Reihen von Speicherzellen 5. Die Schmalseite des Kühlkörpers 15 weist bei dem hier dargestellten Ausführungsbeispiel eine Breite zwischen 1 und 3 cm auf. Im Inneren des Kühlkörpers sind mehrere Kühlschleifen 16 für die Leitung des Kühlmediums durch den Wärmetauscher 6 angeordnet. Die Kühlschleifen 16 verlaufen zu den oberen und unteren Begrenzungsflächen des Kühlkörpers 15 parallel. Bei dem hier dargestellten Ausführungsbeispiel des Wärmetauschers 6 sind im Inneren des Kühlkörpers 15 drei solcher Kühlschleifen 16 vorgesehen. Eine dieser Kühlschleifen 16 ist im Detail dargestellt. Jede Kühlschleife 16 wird durch zwei Kanäle 16H,16R gebildet, die senkrecht untereinander angeordnet sind. Die Kanäle 16H,16R verlaufen parallel zu den oberen und unteren Begrenzungsflächen des Kühlkörpers 15. Im Bereich des ersten Endes 18 des Kühlkörpers 15 ist die zwischen den beiden Kanälen 16H, 16R horizontal angeordnete Trennwand 17 unterbrochen, so daß eine Umlenköffnung 16U zwischen den beiden Kanälen 16H, 16R gebildet ist. Am zweiten Ende des Kühlkörpers 15 weist der Kanal 16H im Bereich der ersten großen Kühlfläche 15A eine Eintrittsöffnung 20 für das Kühlmedium auf. Der Kanal 16R besitzt am zweiten Ende 19 des Kühlkörpers 15, im Bereich der zweiten großen Kühlfläche 15B eine Austrittsöffnung 21.

Wie anhand von Figur 2 weiterhin zu sehen ist, stehen die Eintrittsöffnungen 20 der Kanäle 16H am zweiten Ende 19 des Kühlkörpers 15 mit einem quaderförmigen Zuführungskanal 22 in Verbindung. Dieser ist senkrecht gegen die große Kühlfläche 15A gesetzt, und mit dem Kühlkörper 15 gasdicht verbunden. Der Zuführungskanal 22 weist die gleiche Höhe wie der Kühlkörper 15 auf. Seine Breite ist so gewählt, daß er geringfügig über die an der Kühlfläche 15A anzuordnende Reihe von Speicherzellen (hier nicht dargestellt) nach außen übersteht. Seine Tiefe wird durch die Menge des durch den Wärmetauscher 6 zu leitenden Kühlmediums bestimmt. Der Zuführungskanal 22 weist eine Eintrittsöffnung 23 für das Kühlmedium auf. Die Eintrittsöffnung ist bei dem hier dargestellten Ausführungsbeispiel im unteren Bereich des Zuführungskanals 22 angeordnet. Bei Bedarf kann sie jedoch auch im oberen Bereich installiert werden. Die am zweiten Ende 19 des Kühlkörpers 15 im Bereich der zweiten großen Kühlfläche 15B angeordneten Austrittsöffnungen 21 der Kanäle 16R münden in einen Ableitungskanal 24 für das Kühlmedium. Dieser Ableitungskanal 24 ist in gleicher Weise wie der Zuführungskanal 22 ausgebildet, und mit dem Kühlkörper 15 verbunden. Der Ableitungskanal 24 weist an seinem unteren Ende eine Austrittsöffnung 25 für das Kühlmedium auf. Die Austrittsöffnung 25 kann bei Bedarf auch am oberen Ende des Ableitungskanales 24 angeordnet werden. Die Eintrittsöffnung 23 des Wärmetauschers 6 ist an die in Figur 1 dargestellte Leitung 11 angeschlossen, während die Austrittsöffnung 25 des Ableitungskanals 24 mit der Leitung 12 in Verbindung steht.

Für die Kühlung der Speicherzellen 5 wird den Wärmetauschern 6 über die Leitung 11 von außen beispielsweise Luft zugeführt. Diese strömt über den Zuführungskanal 22 in die Öffnungen 20 der Kanäle 16H. Von dort wird sie bis zum ersten Ende 18 des Kühlkörpers 15 geleitet, wo sie über die in den Trennwänden 17 vorgesehenen Umlenköffnungen 16U in die zweiten Kanäle 16R der Kühlschleifen 16 strömt. Von hier wird das Kühlmedium zum zweiten Ende 19 des Kühlkörpers 15 zurückgeleitet, und gelangt über die Öffnungen 21 in den Kanälen 16R in den Ableitungskanal 24. Während das Kühlmedium durch die oben beschriebenen Kühlschleifen 16 hindurchströmt, nimmt es die von den Speicherzellen 5 an die Kühlflächen 15A, 15B abgegebene Wärme auf. Durch das mit Hilfe der Kühlschleifen 16 ausgebildete Gegenströmungsprinzip wird bewirkt, daß die beiden Kühlflächen 15A, 15B eine gleichmäßige Temperaturverteilung aufweisen, so daß damit eine gleichmäßige Kühlung aller an den Kühlkörper 15 angrenzenden Speicherzellen ermöglicht wird. Die erwärmte Kühlluft wird über die Ableitung 12 aus den Wärmetauschern 6 und dem Innenraum 4 der Hochtemperatur-Speicherbatterie nach außen abgeleitet.

Erfindungsgemäß besteht die Möglichkeit, in die Eintrittsöffnungen 23 der Zuführungskanäle 22 Ventile (hier nicht dargestellt) einzubauen, so daß die Menge des zuzuführenden Kühlmediums und die Dauer dieser Zuführung gesteuert werden kann. Mittels Fühler (hier nicht dargestellt), die steuernd auf die Ventile einwirken können, ist eine gezielte Regelung der Kühlung möglich.

Bei einer Überbelastung der Hochtemperatur-Speicherbatterie 1 kann es zu einem sehr großen Ansteigen der Innentemperatur der Speicherzellen kommen. Damit in diesem Fall eine zusätzliche direkt wirkende Kühlung für die Speicherzellen zur Verfügung steht, besteht die Möglichkeit, in den Kühlflächen 15A, 15B der Kühlkörper 15, insbesondere im Bereich der Kanäle 16H, verschließbare Öffnungen (hier nicht dargestellt) vorzusehen. Das Öffnen und Schließen derselben kann über eine temperaturgesteuerte Regeleinrichtung folgen, die beim Ansteigen der Temperaturen im Innenraum 4 der Hochtemperatur-Speicherbatterie 1 auf Werte, die wesentlich über der Arbeitstemperatur der Speicherzellen 5 liegen, anspricht. Über diese Öffnungen (hier nicht dargestellt) kann dann das Kühlmedium direkt in den Innenraum 4. geleitet werden, so daß eine unmittelbare Kühlung der Speicherzellen mit dem Kühlmedium möglich ist. In diesem Fall ist eine weitere Ableitung (hier nicht dargestellt), für das in den Innenraum 4 geleitete Kühlmedium erforderlich.

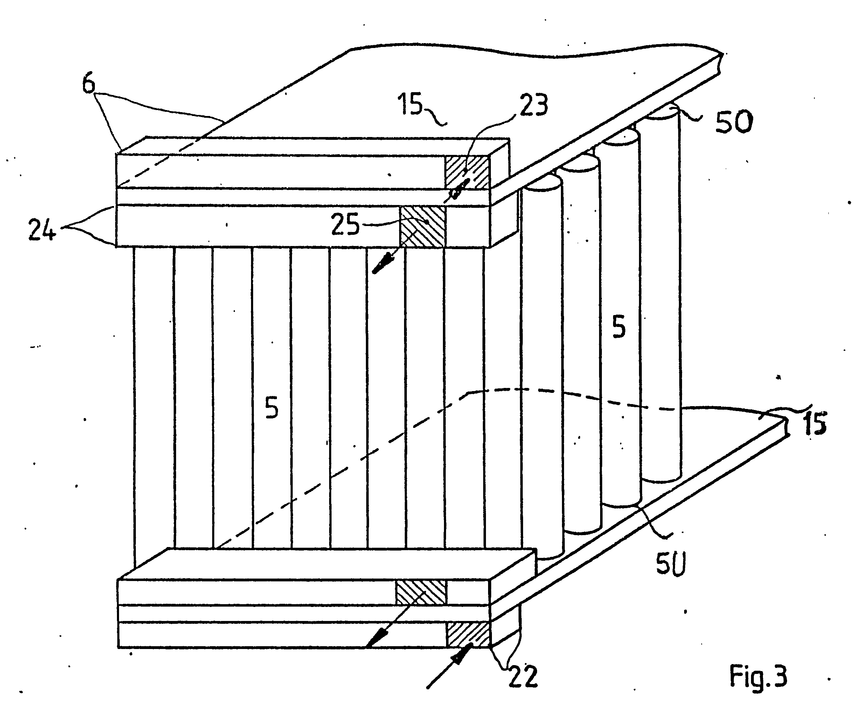

In Figur 3 ist eine andere Anordnung der Wärmetauscher 6 und der ihnen zugeordneten Speicherzellen 5 dargestellt. Die Speicherzellen 5 sind so positioniert, daß sie einen Quader bilden. Sie sind dabei so angeordnet, daß sich benachbarte Speicherzellen nicht berühren, sondern vielmehr ein kleiner Freiraum zwischen ihnen verbleibt. Wie anhand von Figur 3 zu sehen ist, sind zwei Wärmetauscher 6 für die Kühlung der Speicherzellen 5 vorgesehen. Ein erster Wärmetauscher 6 ist über den oberen Begrenzungsflächen 5O der Speicherzellen 5 angeordnet, während der zweite Wärmetauscher 6 gegen die unteren Begrenzungsflächen 5U der Speicherzellen 5 gesetzt ist. Die Wärmetauscher 6 sind so nahe wie möglich an den Speicherzellen angeordnet. Die beiden Wärmetauscher 6 sind in entsprechender Weise wie der in Figur 2 im Detail dargestellte Wärmetauscher 6 ausgebildet. Die Ableitung der Wärme von den Speicherzellen 5 wird bei dieser Anordnung nicht nur über die Längsseiten der Zellen, sondern vor allem auch über ihre oberen und unteren Stirnflächen bewirkt. Die Wärmeableitung erfolgt hier durch Strahlungsausgleich, Wärmeleitung und Konvektion durch die zwischen den Speicherzellen befindliche Luft oder durch ein inertes Gas, das zusätzlich im Innenraum 4 der Hochtemperatur-Speicherbatterie angeordnet ist. Diese Anordnung der Wärmetauscher 6 und der Speicherzellen 5 bietet die Möglichkeit einer größeren Packungsdichte der Speicherzellen.

Um bei dieser Anordnung die Ableitung der Wärme noch zusätzlich zu vergrößeren ist es sinnvoll, den Festkörperkontakt zwischen den Speicherzellen 5 und den Wärmetauschern 6 zu verbessern. Hierfür wird jede Speicherzelle 5 von einer Hülse (hier nicht dargestellt) aus einem gut wärmeleitenden Material umgeben. Die Länge der Hülsen ist so bemessen, daß sie direkt an die Wärmetauscherflächen 6 angrenzen, und zusätzlich mit diesen gut wärmeleitend verbunden sind. Die Verwendung solcher Hülsen ist auch bei der in Figur 1 dargestellten Anordnung von Wärmetauschern 6 und Speicherzellen 5 möglich und sinnvoll. Vorzugsweise werden die Hülsen hierbei im Bereich der Kontaktflächen abgeflacht, so daß ein größerer flächiger Kontakt zwischen den Hülsen und den Kühlflächen 15A, 15B möglich ist.

Bei der Anordnung der Wärmetauscher 6 über und unter den Speicherzellen 5 ist es möglich, die inneren Elektroden (hier nicht dargestellt) der Speicherzellen 5 wärmeleitend, jedoch elektrisch isoliert, mit wenigstens einem Wärmetauscher 6 zu verbinden.

Mit dieser Maßnahme können nicht nur die Gehäuse der Speicherzellen 5, sondern auch ihre Innenbereiche in ausreichendem Maße gekühlt werden.

**Patentansprüche**

1. Hochtemperatur-Speicherbatterie (1) mit einem doppelwandigen Gehäuse (2) zwischen dessen Gehäusewandungen (2A,2B) wenigstens ein Isoliermaterial (3) angeordnet ist, und dessen Innenraum (4) wenigstens eine Speicherzelle (5) sowie eine Kühleinrichtung für die Speicherzelle (5) aufweist, dadurch gekennzeichnet, daß wenigstens eine als Wärmetauscher ausgebildete Kühleinrichung (6) vorgesehen ist, und daß jedem Wärmetauscher mindestens eine Speicherzelle (5) zugeordnet ist.

2. Hochtemperatur-Speicherbatterie nach Anpruch 1, dadurch gekennzeichnet, daß jeder Wärmetauscher (6) im wesentlichen als quaderförmiger Kühlkörper (15) ausgebildet ist, der wenigstens zwei große Kühlflächen (15A, 15B) aufweist.

3. Hochtemperatur-Speicherbatterie nach den Ansprüchen 1 und 2, dadurch gekennzeichnet, daß jeder Kühlkörper (15) im Inneren wenigstens eine Kühlschleife (16) aufweist, und daß jede Kühlschleife (16) aus wenigstens zwei senkrecht untereinander angeordneten Kanälen (16H,16R) gebildet ist, die am ersten Ende (18) des Kühlkörpers (15) jeweils über eine Umlenköffnungen (16U) miteinander verbunden sind.

4. Hochtemperatur-Speicherbatterie nach Anspruch 3, dadurch gekennzeichnet, daß jede Kühlschleife (16) nur eine Eintrittsöffnung (20) und nur eine Austrittsöffnung (21) für das Kühlmedium aufweist, und daß die Eintrittsöffnungen (20) mit einem gemeinsamen Zuführungskanal (22) und die Autrittsöffnungen (21) ebenfalls mit einem gemeinsamen Ableitungskanal (24) für das Kühlmedium in Verbindung stehen.

5. Hochtemperatur-Speicherbatterie nach Anspruch 3 oder 4, dadurch gekennzeichnet, daß die Eintrittsöffnungen (20) der Kühlschleifen (16) am zweiten Ende (19) des Kühlkörpers (15) im Bereich der ersten Kühlfläche (15A) angeordnet sind, während die Austrittsöffnungen der Kühlschleifen (16) am zweiten Ende (19) im Bereich der zweiten Kühlfläche (15B) installiert sind.

6. Hochtemperatur-Speicherbatterie nach einem der Ansprüche 1 bis 5, dadurch gekennzeichnet, daß das Kühlmedium eine Flüssigkeit oder ein Gas ist.

7. Hochtemperatur-Speicherbatterie nach einem der Ansprüche 3 bis 6, dadurch gekennzeichnet, daß die Speicherzellen (5) mit ihren Längsachsen senkrecht zu den Kanälen (16H, 16R) der Kühlschleifen (16) angeordnet und in einer wärmeleitenden Verbindung längs der Kühlflächen (15A, 15B), eine Reihe bildend, installiert sind.

8. Hochtemperatur-Speicherbatterie nach einem der Ansprüche 2 bis 6, dadurch gekennzeichnet, daß die Speicherzellen (5) einen Quader bildend angeordnet sind, und gegen ihre oberen und/oder unteren Begrenzungsflächen (5O, 5U) jeweils wenigstens eine Kühlfäche (15A, 15B) eines Wärmetauschers (6) gesetzt ist, und daß zwischen jeweils benachbarten Speicherzellen (5) ein kleiner Freiraum über die gesamte Länge vorgesehen ist.

9. Hochtemperatur-Speicherbatterie nach einem der Ansprüche 1 bis 8, dadurch gekennzeichnet, daß der Innenraum der Speicherzellen (5) über ihre Innenelektrode für die Wärmeableitung elektrisch isoliert mit einer Kühlfläche (15A, 15B) verbunden ist.

10. Hochtemperatur-Speicherbatterie nach einem der Ansprüche 1 bis 9, dadurch gekennzeichnet, daß jede Speicherzelle (5) von einer Hülse aus einem gut wärmeleitenden Material umgeben ist, welche über Festkörperkontakte mit den Kühlflächen (15A, 15B) verbunden ist.

## Revendications

1. Batterie d'accumulateur à haute température (1) comprenant une enveloppe (2) à double paroi entre les parois (2A, 2B) de laquelle est disposée au moins une matière isolante (3) et dont l'espace intérieur (4) presente au moins un élément d'accumulateur (5) ainsi qu'un dispositif de refroidissement pour ledit élément d'accumulateur (5), caractérisée par le fait qu'il comprend au moins un dispositif de refroidissement (6) réalisé sous la forme d'un échangeur de chaleur et par le fait qu'à chaque échangeur de chaleur est associé au moins un élément d'accumulateur (5).

2. Batterie d'accumulateur à haute température selon la revendication 1, caractérisée par le fait que chaque échangeur de chaleur (6) a sensiblement la forme d'un élément de refroidissement (15) parallélépipédique et présente au moins deux faces de refroidissement (15A, 15B) de grandes dimensions.

3. Batterie d'accumulateur à haute température selon les revendications 1 et 2, caractérisée par le fait que chaque élément de refroidissement (15) présente intérieurement au moins une boucle de réfrigération (16) et par le fait que chaque boucle de réfrigération (16) est constituée d'au moins deux canaux (16H, 16R) disposés verticalement l'un en dessous de l'autre et reliés l'un à l'autre à la première extrémité (18) de l'élément de refroidissement (15) respectivement à travers un orifice de renvoi (16U).

4. Batterie d'accumulateur à haute température selon la revendication 3, caractérisée par le fait que chaque boucle de réfrigération (16) ne présente qu'un seul orifice d'entrée (20) et un seul orifice de sortie (21) pour le fluide réfrigérant et par le fait que les orifices d'entrée (20) sont reliés à un canal d'arrivée commun (22) et les orifices de sortie (21) à un canal commun d'évacuation (24) pour le fluide refrigérant.

5. Batterie d'accumulateur à haute température selon la revendication 3 ou 4, caractérisée par le fait que les orifices d'entrée (20) des boucles de réfrigération (16) sont disposés à la deuxième extrémité (19) de l'élément de refroidissement (15) dans la zone de la première face de refroidissement (15A), tandis que les orifices de sortie des boucles (16) sont installés à la deuxième extrémité (19) dans la zone de la deuxième face de refroidissement (15B).

6. Batterie d'accumulateur à haute température selon l'une des revendications 1 à 5, caractérisée par le fait que le fluide réfrigérant est un liquide ou un gaz.

7. Batterie d'accumulateur à haute température selon l'une des revendications 3 à 6, caractérisée par le fait que les éléments d'accumulateur (5) sont disposés de manière que leurs axes longitudinaux soient perpendiculaires aux canaux (16H, 16R) des boucles de réfrigération (I6) et sont installés avec conduction thermique en une rangée le long des faces de refroidissement (15A, 15B).

6. Batterie d'accumulateur à haute température selon l'une des revendications 2 à 6, caractérisée par le fait que les éléments d'accumulateur (5) sont disposés de manière à former un parallélépipède et que contre leurs faces limites supérieures et/ou inférieures (5O, 5U) est placée au moins une face de refroidissement (15A, 15B) d'un échangeur de chaleur (6) et par le fait qu'entre deux éléments d'accumulateur (5) respectivement voisins est prévu un petit espace libre sur l'ensemble de la longueur.

9. Batterie d'accumulateur à haute température selon l'une des revendications 1 à 8, caractérisée par le fait que l'espace interne des eléments d'accumulàteur (5) est relié par l'intermédiaire des électrodes internes des éléments, avec isolement électrique, à une face de refroidissement (15A, 15B) en vue de l'évacuation de la chaleur.

10. Batterie d'accumulateur à haute température selon l'une des revendications 1 à 9, caractérisée par le fait que chaque élément d'accumulateur (5) est entouré par un manchon en matériau bon conducteur de la chaleur, qui est relié aux faces de refroidissement (15A, 15B) par des contacts solides.

## Claims

1. High-temperature storage battery (1) with a double-walled housing (2), between the housing walls (2A, 2B) of which at least one insulating material (3) is arranged and the interior (4) of which contains at least one storage cell (5) and a cooling device for the storage cell (5), characterised in that at least one cooling device (6) designed as a heat exchanger is provided, and that at least one storage cell (5) is associated with each heat exchanger.

2. High-temperature storage battery according to Claim 1, characterised in that each heat exchanger (6) is designed substantially as a cuboid-shaped cooling body (15) which has at least two large cooling surfaces (15A, 15B).

3. High-temperature storage battery according to Claims 1 and 2, characterised in that each cooling body (15) has in the interior at least one cooling loop (16), and that each cooling loop (16) is formed by at least two channels (16H, 16R) which are arranged vertically below one another and which are mutually connected at the first end (18) of the cooling body (15) in each case via deflection orifices (16U).

4. High-temperature storage battery according to Claim 3, characterised in that each cooling loop (16) has only one inlet orifice (20) and only one outlet orifice (21) for the coolant, and that the inlet orifices (20) are connected to a common feed channel (22) and the outlet orifices (21) are likewise connected to a common discharge channel (24) for the coolant.

5. High-temperature storage battery according to Claim 3 or 4, characterised in that the inlet orifices (20) of the cooling loops (16) are arranged on the second end (19) of the cooling body (15) in the region of the first cooling surface (15A), whereas the outlet orifices of the cooling loops (16) are installed on the second end (19) in the region of the second cooling surface (15B).

6. High-temperature storage battery according to one of Claims 1 to 5, characterised in that the coolant is a liquid or a gas.

7. High-temperature storage battery according to one of Claims 3 to 6, characterised in that the storage cells (5) are arranged with their longitudinal axes perpendicular to the channels (16H, 16R) of the cooling loops (16) and are installed in heat-conducting connection along the cooling surfaces (15A, 15B), forming a row.

8. High-temperature storage battery according to one of Claims 2 to 6, characterised in that the storage cells (5) are arranged to form a cuboid and at least one cooling surface (15A, 15B) of a heat exchanger (6) is set against their upper and/or lower boundary surfaces (5O,5U), and that a small free space is provided in each case over the entire length between adjacent storage cells (5).

9. High-temperature storage battery according to one of Claims 1 to 8, characterised in that the interior of the storage cells (5) is connected via their internal electrodes, in an electrically insulating manner, to a cooling surface (15A,15B) for heat removal.

10. High-temperature storage battery according to one of Claims 1 to 9, characterised in that each storage cell (5) is surrounded by an envelope which consists of a material of high thermal conductivity and is connected via solid-body contacts to the cooling surfaces (15A, 15B).

Fig. 1

Fig. 2

Fig.3

0 109 543

5